# EUROPÄISCHE PATENTANMELDUNG

(11) **EP 1 618 782 A1**
(43) Veröffentlichungstag der Anmeldung: **25.01.2006**
(21) Anmeldenummer: 05015557.1
(22) Anmeldetag: 18.07.2005
(51) Int. Cl.: A01G 13/02

(54) **Witterungsschutz für Pflanzenkulturen**

(30) Priorität: 20.07.2004 IT BZ20040034
(71) Anmelder: Tamanini, Emanuel, 39100 Bolzano (IT); Gasser, Michael, 39100 Bolzano (IT)
(72) Erfinder: Tamanini, Emanuel, 39100 Bolzano (IT); Gasser, Michael, 39100 Bolzano (IT)
(74) Vertreter: Schwan - Schwan - Schorer

(57) **Zusammenfassung**

Die vorliegende Erfindung betrifft eine Witterungsschutzvorrichtung für Pflanzenkulturen (10), mit mindestens einer flexiblen Witterungsschutzabdeckung (12), mindestens einer Stützvorrichtung (14) zum Tragen jeder Witterungsschutzabdeckung, einem drehbaren Antriebselement (32), und mindestens einem von der Drehbewegung des Antriebselements zu einer Umlaufbewegung angetriebenen Antriebsglied (34), wobei das Antriebsglied mit sich gegenläufig bewegenden Abschnitten an gegenüberliegenden Rändern der Witterungsschutzabdeckung(en) angreift und mittels Umlenkelementen (38, 40A, 40B, 42A, 42B, 46) derart umgelenkt ist, um die Witterungsschutzabdeckung(en) je nach Drehrichtung des Antriebselements in einer Schutzstellung auf der jeweiligen Stützvorrichtung aufzuspannen bzw. in einer Ruhestellung paketartig zwischen den beiden Rändern zusammenzuschieben.

## Beschreibung

Die vorliegende Erfindung betrifft eine Witterungsschutzvorrichtung für Pflanzenkulturen, z.B. Obstbäume.

In der WO 95/25424 ist ein langgestrecktes Hagelschutznetz für in einer Reihe gepflanzte Obstbäume beschrieben, welches von in Längsrichtung in regelmäßigen Abständen Pfeilern abgestützt ist und mittels einer Spannvorrichtung über den Obstbäumen aufgespannt ist. In einer Schutzstellung nimmt das Hagelschutznetz die Form eines langgestreckten Rechtecks ein, wobei eine von einem mechanischen Antrieb (Motor) angetriebene Welle vorgesehen ist, auf welcher Steuerseile auf- bzw. abgewickelt werden, um das Hagelschutznetz zwischen der aufgespannten Schutzstellung und einer Ruhestellung zu verstellen, in welcher das Hagelschutznetz die Form eines spitzwinkeligen Parallelogramms hat.

Ferner ist es bekannt, Hagelschutznetze für Obstbäume in der Form eines Firstdaches über den einzelnen Baumreihen manuell aufzuspannen, wobei das Hagelschutznetz wiederum manuell aus einer aufgespannten Schutzstellung in eine Ruhestellung gebracht werden kann, in welcher das Hagelschutznetz paketartig auf dem First zusammengeschoben ist. Nachteilig bei einer solchen manuellen Verstellung ist der große Aufwand.

Es ist Aufgabe der vorliegenden Erfindung eine Witterungsschutzvorrichtung für Pflanzenkulturen zu schaffen, welche auf einfache Weise zwischen einer Schutzstellung, in welcher die Pflanzenkulturen abgedeckt sind, und einer Ruhestellung, in welcher die Pflanzenkulturen höchstens teilweise abgedeckt sind, verstellt werden kann.

Diese Aufgabe wird erfindungsgemäß gelöst durch eine Witterungsschutzvorrichtung gemäß Anspruch 1.

Bei dieser Lösung ist vorteilhaft, dass dadurch, dass die Witterungsschutzabdeckung von einem umlaufenden Antriebsglied versehen ist, welches derart umgelenkt ist, dass sich gegenläufig bewegende Abschnitte des Antriebsglied an gegenüberliegenden Rändern der Witterungsschutzabdeckung angreifen, die Witterungsschutzabdeckung in bequemer Weise relativ rasch je nach Drehrichtung des Antriebselements zwischen einer Schutzstellung und einer Ruhestellung verstellt werden kann.

Bei dem Antriebsglied handelt es sich vorzugsweise um ein geschlossenes Antriebsseil.

Die Witterungsschutzvorrichtung ist vorzugsweise als Schutz vor Hagel und/oder zu starker Sonneneinstrahlung ausgebildet.

Vorzugsweise ist die bzw. jede Witterungsschutzabdeckung in der Schutzstellung nach Art eines Firstdaches aufgespannt und langgestreckt ausgebildet, wobei die Verstellung zwischen der Schutzstellung und der Ruhestellung in der Querrichtung erfolgt und die Witterungsschutzabdeckung in der Ruhestellung im Bereich des Firsts zusammengeschoben ist.

Die Stützvorrichtung weist vorzugsweise an den beiden Stirnseiten jeweils sich in Querrichtung erstreckende Führungselemente zum Führen der bzw. jeder Witterungsschutzabdeckung bei der Bewegung zwischen der Ruhestellung und der Schutzstellung auf.

Die Führungselemente können als Schienen ausgebildet sein, in welchen Spannelemente geführt sind.

Vorzugsweise ist das in Längsrichtung erste und letzte Antriebsglied jeweils fest mit den Spannelementen verbunden.

Jede Witterungsschutzabdeckung kann an ihren beiden Längskanten mit einem sich in die Längsrichtung erstreckenden Spanndraht versehen sein. Vorzugsweise greift mindestens je eines der Spannelemente an jedem Ende jedes Spanndrahts an, um diesen in Längsrichtung zu spannen. Vorzugsweise ist jeder Spanndraht mittels Klemmen an der Witterungsschutzabdeckung befestigt und in Längsrichtung bezüglich der Witterungsschutzabdeckung verschiebbar. Vorzugsweise greift mindestens jedes Antriebsglied mit Ausnahme des in Längsrichtung ersten und letzten Antriebsglieds mittels eines Rings oder einer Lasche an dem Spanndraht an, so dass der Spanndraht bezüglich des Antriebsglieds in Längsrichtung verschiebbar ist.

Vorzugsweise weist jede Stützvorrichtung mehrere in einer Linie angeordnete Stützpfeiler, einen über die Spitzen der Stützpfeiler gespannten Firstdraht, sowie an dem ersten und dem letzten Stützpfeiler jeweils sich beidseitig in Querrichtung erstreckende Führungselemente zum Führen der Witterungsschutzabdeckung bei der Bewegung zwischen der Ruhestellung und der Schutzstellung auf. Vorzugsweise ist jede Witterungsschutzabdeckung mit dem entsprechenden Firstdraht mittels Klemmen verbunden.

Vorzugsweise ist mindestens jeder Stützpfeiler mit Ausnahme des ersten und des letzten in der Querrichtung für jeden der beiden gegenläufigen Abschnitte des Antriebsglieds mit zwei Umlenkrollen versehen, deren Drehachsen in der Längsrichtung verlaufen, wobei jeder der beiden gegenläufigen Abschnitte des Antriebsglieds S-artig derart über die beiden Umlenkrollen geführt ist, dass jeder der beiden gegenläufigen Abschnitte des Antriebsglieds mittels der beiden Umlenkrollen in vertikaler Richtung parallel versetzt wird. Vorzugsweise ist für jeden gegenläufigen Abschnitt des Antriebsglieds zwischen dem Antriebselement und den Umlenkrollen des in Querrichtung gesehen ersten Stützpfeilers eine am Boden verankerte Umlenkrolle vorgesehen ist.

Vorzugsweise ist die bzw. jede Witterungsschutzabdeckung an ihren stirnseitigen Enden fest mit dem Boden verankert.

Das Antriebselement kann mittels einer Handkurbel, einem Elektromotor bzw. Verbrennungsmotor oder einem Hydraulikmotor angetrieben werden. Ferner kann ein abnehmbares Getriebe für das Antriebselement vorgesehen sein.

Vorzugsweise ist die Witterungsschutzvorrichtung für in Reihen gepflanzten Obstbäume ausgebildet.

Weitere bevorzugte Ausgestaltungen der Erfindung ergeben sich aus den Unteransprüchen.

Im Folgenden wird die Erfindung unter Bezugnahme auf die beiliegenden Zeichnungen beispielhaft näher erläutert. Dabei zeigen:
- Fig. 1: eine schematische Seitenansicht einer erfindungsgemäßen Witterungsschutzvorrichtung;
- Fig. 2: eine Querschnittansicht der Witterungsschutzvorrichtung von Fig. 1 entlang der Linie I-I in der Schutzstellung;
- Fig. 3: eine schematische Seitenansicht eines einzelnen Stützpfeilers; und
- Fig. 4: eine Querschnittansicht der Witterungsschutzvorrichtung in der Nähe eines einzelnen Stützpfeilers in der Ruhestellung.

In dem gezeigten Beispiel ist eine erfindungsgemäße Witterungsschutzvorrichtung anhand einer Hagelschutzvorrichtung erläutert. Das dort gezeigte Prinzip kann jedoch auch in ähnlicher Weise z.B. auch für eine Sonnenschutzvorrichtung verwendet werden, bei welcher dann die Hagelnetze durch Sonnenschutzplanen ersetzt sind.

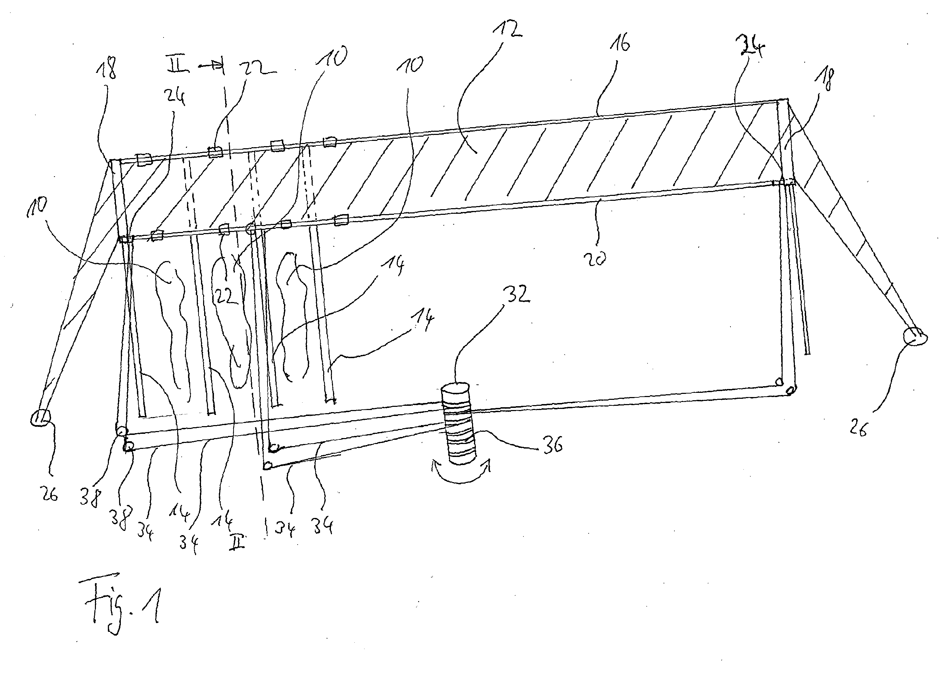

Fig. 1 zeigt schematisch eine Seitenansicht eines Beispiels einer erfindungsgemäßen Hagelschutzvorrichtung für Pflanzenkulturen 10, welche in mehreren parallelen Reihen gepflanzt sind. Vorzugsweise handelt es sich bei den Pflanzenkulturen um Obstbäume 10. Die Hagelschutzvorrichtung umfasst mehrere Hagelschutzabdeckungen, die vorzugsweise als entlang der Baumreihen verlaufende, parallel angeordnete Hagelschutznetze 12 ausgebildet sind. Jedes Hagelschutznetz 12 wird dabei von einer eigenen Stützvorrichtung abgestützt, die im gezeigten Beispiel von in einer Reihe im Abstand von beispielsweise 6 m aufgestellten Stützpfeilern 14 gebildet wird, über deren Spitzen ein Firstdraht 16 gespannt ist (in Fig. 1 sind nicht alle der Stützpfeiler 14 gezeigt). An dem ersten und dem letzten der Stützpfeiler 14 sind jeweils zwei sich in Querrichtung erstreckende Führungsschienen 18 angebracht, die zueinander nach Art eines Firstdaches, vorzugsweise mit einem Winkel von 60° bis 85° zur Vertikalen, angeordnet sind.

An den beiden Seitenrändern eines jeden Hagelschutznetzes 12 ist jeweils ein in Längsrichtung verlaufender Spanndraht 20 vorgesehen, der mittels Befestigungselementen 22 so an dem Hagelschutznetz 12 befestigt ist, dass er bezüglich des Hagelschutznetzes 12 in Längsrichtung verschiebbar ist. In ähnlicher Weise ist jedes Hagelschutznetz 12 mittels Befestigungselementen 22 an dem Firstdraht 16 befestigt. An dem vorderen und dem hinteren Ende des Spanndrahts 20 ist dieser fest mit einem Spannelement 24 verbunden, welches in der jeweiligen Führungsschienen 18 in Querrichtung verschiebbar geführt ist, z.B. mittels einer Rolle. Mittels Betätigung der beiden Spannelemente 24 kann der Spanndraht zwischen den beiden Führungsschienen 18 in gewünschter Weise gespannt werden.

Das vordere und das hintere Ende an den beiden Stirnseiten eines jeden Hagelschutznetzes 12 steht über den ersten bzw. den letzten der Stützpfeiler 14 über und ist mittels eines Bodenankers 26 am Boden verankert. Dabei erstreckt sich jedes Hagelschutznetz 12 über die Oberseite der Führungsschienen 18 hinweg zum Bodenanker 26. Die Bodenanker 26 dienen dazu, jedes Hagelschutznetz 12 in Längsrichtung zu spannen.

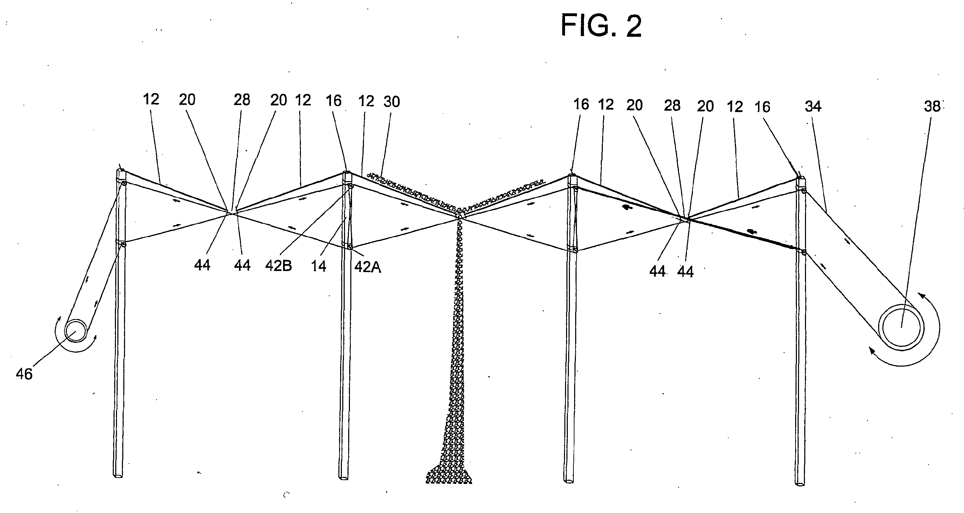

Jedes Hagelschutznetz 12 ist mittels eines nachfolgend näher beschriebenen Antriebs zwischen einer Schutzstellung, in welcher es als Hagelschutzabdeckung für die Bäume 10 wirkt, und einer Ruhestellung verstellbar, in welcher es paketartig zwischen den beiden seitlichen Rändern paketartig in der Nähe des Firstdrahts 16 zusammengeschoben ist. In der Schutzstellung, die in Fig. 2 gezeigt ist, ist jedes Hagelschutznetz 12 nach Art eines Firstdaches auf den Stützpfeilers 14 seitlich aufgespannt, wobei der Winkel zur Vertikalen vorzugsweise zwischen 60° und 85° beträgt. Zwischen benachbarten Hagelschutznetzen 12 ist ein kleiner freier Zwischenraum 28 vorgesehen, durch welchen die sich auf der Oberseite der Hagelschutznetze 12 sammelnden Hagelkörner 30 nach unten auf dem Boden fallen können. Da Hagel im Wesentlichen im Sommer auftritt, ist die Schutzstellung die im Sommer bevorzugte Stellung, während die zusammengeschobene Ruhestellung den ganzen Winter überdauert, oder die Pflanzenkulturen für Ernte- oder Pflegearbeiten zugänglich macht. Die Ruhestellung ist in Fig. 4 beispielhaft gezeigt.

Bei den Befestigungselementen 22 handelt es sich vorzugsweise um klammerartige Elemente, welche den Rand bzw. eine Falte des Hagelschutznetzes 12 umklammern und ferner Ösen aufweisen, durch welche der Firstdraht 16 bzw. der Spanndraht 22 gezogen ist und in welcher er in Längsrichtung verschiebbar ist. Vorzugsweise verrastet jedes Befestigungselement 22 in der das Netz umklammernden Stellung, wobei das Befestigungselement 22 fest mit dem Hagelschutznetz 12 verbunden ist. Diesem Zweck weist das Befestigungselement 22 vorzugsweise Dorne auf, welche das Hagelschutznetz 12 durchdringen.

Der Antrieb für die Hagelschutzvorrichtung weist ein sich drehendes Antriebselement, welches beispielsweise als am Boden verankerte Antriebswelle 32 ausgebildet sein kann und dazu dient, mehrere in sich geschlossene Antriebsglieder zu einer Umlaufbewegung anzutreiben, bei welchen es sich vorzugsweise um jeweils ein geschlossenes Antriebsseil 34 handelt. Für jedes Antriebsseil 34 ist an der Antriebswelle 32 eine eigene Seilrille 36 vorgesehen, in welcher das entsprechende Seil 34 mittels Reibung zu der Umlaufbewegung angetrieben wird. Gemäß Fig. 1 sind in der Längsrichtung des Hagelschutznetzes 12 verteilt mehrere geschlossene Antriebsseile 34 vorgesehen, die alle von der gemeinsamen Antriebswelle 32 angetrieben werden, wobei der Abstand in Längsrichtung beispielsweise 12 m betragen kann, so dass jeder zweite Stützpfeiler 14 mit einem Antriebsseil 34 versehen ist. Dabei wird jedes Antriebsseil 34 mittels entsprechender am Boden verankerter Umlenkrollen 38 zu dem entsprechenden Stützpfeiler 14 hin umgelenkt. Jedes Antriebsseil 34 treibt dabei mehrere in Querrichtung benachbarte Hagelschutznetze 12 an. Alle Antriebsseile 34 treiben dabei dieselben Hagelschutznetze 12 gemeinsam an, so dass die Antriebswelle 32 als Antrieb für mehrere in Querrichtung benachbarte Hagelschutznetze 12 wirkt.

Jedes Antriebsseil 34 ist dabei mittels an den Stützpfeilern 14 angebrachten Umlenkrollen 40A, 40B, 42A, 42B so umgelenkt, dass es mit sich gegenläufig bewegenden Abschnitten an die gegenüberliegenden seitlichen Rändern jedes Hagelschutznetzes 12 so angreift, um das Hagelschutznetz 12 je nach Drehrichtung der Antriebswelle 32 aus der Ruhestellung in die Schutzstellung aufzuspannen bzw. aus der aufgespannten Schutzstellung in die Ruhestellung zusammenzuschieben.

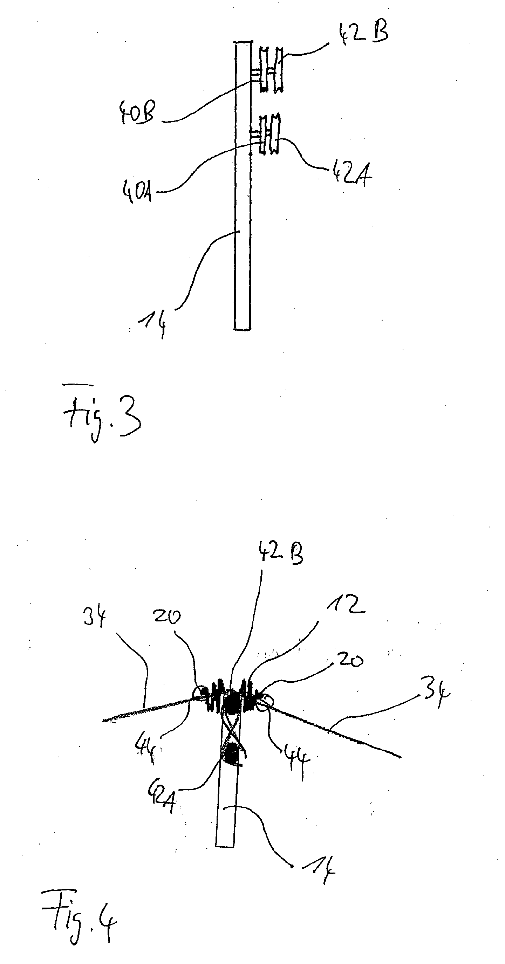

Zum besseren Verständnis sind in Fig. 2 diejenigen Abschnitte des Antriebsseils 34, welche die eine Hälfte der geschlossenen Seilschlaufe bilden, gestrichelt dargestellt, während die Abschnitte, welche die andere Hälfte der von dem Seil 34 gebildeten Schlaufe mit durchgezogenen Linien gezeigt. Zusätzlich sind die Bewegungsrichtungen der einzelnen Seilabschnitte mit Pfeilen angedeutet. Die Umlenkrollen an den Stützpfeilern 14 sind gemäß Fig. 3 so ausgebildet, dass in vertikaler Richtung versetzt jeweils zwei Umlenkrollen 40A, 42A bzw. 40B, 42B auf einer gemeinsamen bzw. Welle angeordnet sind, wobei beispielsweise die näher an dem Stützpfeiler 14 liegenden Umlenkrollen 42A, 42B für die gestrichelt dargestellte Hälfte der Seilschlaufe 34 vorgesehen sind, während die beiden weiter außen liegenden Umlenkrollen 40A, 40B für die durchgezogen dargestellte Hälfte der Seilschlaufe 34 vorgesehen sind. Die jeweiligen Hälften der Seilschlaufe 34 werden dabei durch die Wirkung der Umlenkrollen 40A, 40B bzw. 42A, 42B S-artig umgelenkt, wobei der Verlauf der beiden Seilhälften jeweils spiegelsymmetrisch zueinander ist, siehe Fig. 2 und 4.

Wie aus Fig. 1 und Fig. 2 ersichtlich, sind der Abstand und die Position der oberen Umlenkrollen 40B, 42B und der unteren Umlenkrollen 40A, 42A so gewählt, dass jeweils ein Seilabschnitt von den unteren Umlenkrollen 40A bzw. 42A einer der Umlenkpfeiler 14 mit einer Steigung zu der oberen Umlenkrolle 40B bzw. 42B des benachbarten Stützpfeilers 14 verläuft, die der Neigung des Hagelschutznetzes 12 entspricht. Jeder der beiden gegenläufigen Abschnitte des Antriebsseiles 34 wird in der vertikalen Richtung durch die Umlenkrollen 40A, 40B, 42A, 42B parallel versetzt, so dass jeder der beiden Seilhälften für sich gesehen sägezahnartig verläuft. Jeder Seilabschnitt greift an dem entsprechenden seitlichen, d.h. unteren Rand des Hagelschutznetzes 12 an. Dies erfolgt vorzugsweise durch einen Ring oder eine Lasche bzw. Öse 44, welcher bzw. welche mit dem Spanndraht 20 so in Eingriff steht, dass der Spanndraht 20 in der Bewegungsrichtung des Seils 34 mitgenommen wird, in der Richtung senkrecht dazu (d.h. der Längsrichtung) bezüglich des Seils 34 jedoch verschiebbar ist. Durch diese Art der Umlenkung wird erreicht, dass an den beiden seitlichen Rändern eines jeden Hagelschutznetzes 12 zwei sich in entgegengesetzter Richtung bewegende Abschnitte des Seils 34, d.h. zwei unterschiedliche Seilhälften, angreifen, wodurch bei der in Fig. 2 gezeigten Drehrichtung der Antriebswelle 32 die Hagelschutznetze 12 aus der in Fig. 2 gezeigten Schutzstellung durch die Bewegung des Seils 34 in Richtung des Firstdrahts 16 paketartig zusammengeschoben werden, bis die in Fig. 4 gezeigte Ruhestellung erreicht ist. Durch Umkehrung der Drehrichtung der Antriebswelle 32 und damit Umkehrung der Richtung der Umlaufbewegung des Seils 34 werden die Hagelschutznetze 12 aus der in Fig. 4 gezeigten Ruhestellung wieder in die Schutzstellung von Fig. 2 aufgespannt. Die Antriebsanordnung ist insgesamt so ausgebildet, dass sich alle Antriebsseile 34 synchron zueinander bewegen. Ferner dienen die Antriebsseile 34 aufgrund des der Eingriff mittels der Ringe bzw. Ösen 44 nicht nur als Antrieb, sondern auch als Zwischenabstützung für die Spanndrähte 20 und als Verbesserung der gesamten Statik.

Die erwähnte Art der Verbindungen zwischen den Spanndrähten 20 und den Antriebsseilen 34 mittels des Rings 44 gilt nicht für das in Längsrichtung gesehene erste Antriebsseil 34 bzw. das letzte Antriebsseil 34. Diese greifen direkt an dem jeweiligen in der Führungsschiene 18 geführten Spannelement 24 fest an, wobei sich das jeweilige Spannelement 24 durch die Antriebswirkung des entsprechenden Antriebsseils 34 entlang der Führungsschiene 18 bewegt.

Die Stützpfeiler 14 sind im Boden verankert und mit separaten Drähten (nicht gezeigt) verspannt. An der Spitze eines jeden Stützpfeilers 14 ist zweckmäßigerweise eine Kappe zum Schutz des Hagelschutznetzes 12 vorgesehen.

An der den Umlenkrollen 38 gegenüberliegenden Seite der Hagelschutznetze 12 ist eine Umlenkrolle 46 vorgesehen, die vorzugsweise am Boden verankert ist.

Zum Antreiben der Antriebswelle 32 ist vorzugsweise ein abnehmbares Getriebe vorgesehen (nicht gezeigt), welches dann von einer Handkurbel, einem Elektromotor bzw. Verbrennungsmotor oder einem Hydraulikmotor angetrieben werden kann, um die Antriebswelle 32 in die gewünschte Drehbewegung zu versetzen.

Der Antrieb der Hagelschutzvorrichtung kann auch ferngesteuert erfolgen.

Die Antriebswelle 32 kann mit einer Blockiereinrichtung versehen sein, um die Hagelschutznetze 12 in der jeweils gewünschten Position zu halten.

Mit einer Antriebsanordnung der gezeigten Art kann beispielsweise eine Anordnung von Hagelschutznetzen 12 erstellt werden, die eine Länge von 60 m und eine Breite von etwa 18 m aufweist. Dadurch kann eine Fläche von ca. 1 ha mit etwa 5-9 Einheiten der gezeigten Art abgedeckt werden.

Jedes der Hagelschutznetze 12 hat typischerweise eine Breite von etwa 3 m, wobei typischerweise eine Schließdauer bzw. Öffnungsdauer des Hagelschutznetzes von etwa 10 Minuten erreicht werden kann.

## Patentansprüche

1. Witterungsschutzvorrichtung für Pflanzenkulturen (10), mit mindestens einer flexiblen Witterungsschutzabdeckung (12), mindestens einer Stützvorrichtung (14) zum Tragen jeder Witterungsschutzabdeckung, einem drehbaren Antriebselement (32), und mindestens einem von der Drehbewegung des Antriebselements zu einer Umlaufbewegung angetriebenen Antriebsglied (34), wobei das Antriebsglied mit sich gegenläufig bewegenden Abschnitten an gegenüberliegenden Rändern der Witterungsschutzabdeckung(en) angreift und mittels Umlenkelementen (38, 40A, 40B, 42A, 42B, 46) derart umgelenkt ist, um die Witterungsschutzabdeckung(en) je nach Drehrichtung des Antriebselements in einer Schutzstellung auf der jeweiligen Stützvorrichtung aufzuspannen bzw. in einer Ruhestellung paketartig zwischen den beiden Rändern zusammenzuschieben.

2. Witterungsschutzvorrichtung gemäß Anspruch 1, **dadurch gekennzeichnet, dass** die bzw. jede Witterungsschutzabdeckung als Hagelnetz (12) oder als Sonnenschutzplane ausgebildet ist.

3. Witterungsschutzvorrichtung gemäß Anspruch 1 oder 2, **dadurch gekennzeichnet, dass** das bzw. jedes Antriebsglied als geschlossenes Antriebsseil (34) ausgebildet ist.

4. Witterungsschutzvorrichtung gemäß Anspruch 3, **dadurch gekennzeichnet, dass** das Antriebselement als am Boden verankerte Welle (32) mit mehreren Seilrillen (36) ausgebildet ist.

5. Witterungsschutzvorrichtung gemäß einem der vorhergehenden Ansprüche, **dadurch gekennzeichnet, dass** die Umlenkelemente als Umlenkrollen (38, 40A, 40B, 42A, 42B, 46) ausgebildet sind.

6. Witterungsschutzvorrichtung gemäß einem der vorhergehenden Ansprüche, **dadurch gekennzeichnet, dass** die bzw. jede Witterungsschutzabdeckung (12) in der Schutzstellung nach Art eines Firstdaches aufgespannt ist.

7. Witterungsschutzvorrichtung gemäß Anspruch 6, **dadurch gekennzeichnet, dass** die bzw. jede Witterungsschutzabdeckung (12) langgestreckt ausgebildet ist, wobei die Verstellung zwischen der Schutzstellung und der Ruhestellung in der Querrichtung erfolgt und die Witterungsschutzabdeckung in der Ruhestellung im Bereich des Firsts zusammengeschoben ist.

8. Witterungsschutzvorrichtung gemäß Anspruch 7, **dadurch gekennzeichnet, dass** der Winkel der beiden Dachseiten zur Vertikalen 60 bis 85° beträgt.

9. Witterungsschutzvorrichtung gemäß Anspruch 7 oder 8, **dadurch gekennzeichnet, dass** mehrere Witterungsschutzabdeckungen (12) parallel zueinander angeordnet sind, wobei die Witterungsschutzabdeckungen von mindestens einem gemeinsamen Antriebsglied (34) angetrieben sind.

10. Witterungsschutzvorrichtung gemäß Anspruch 9, **dadurch gekennzeichnet, dass** in Längsrichtung zueinander versetzt mehrere Antriebsglieder (34) vorgesehen sind, die von einem gemeinsamen Antriebselement (32) angetrieben sind.
